# EUROPÄISCHE PATENTSCHRIFT

(11) **EP 0 338 376 B1**
(45) Veröffentlichungstag und Bekanntmachung des Hinweises auf die Patenterteilung: **22.06.1994**
(21) Anmeldenummer: 89106329.9
(22) Anmeldetag: 10.04.1989
(51) Int. Cl.: G06K 7/10

(54) **Verfahren zum optischen Abtasten von Markierungen auf Gegenständen und Vorrichtung zu seiner Durchführung**
Method for reading optical markings on objects and device for its implementation
Procédé de lecture optique de marques sur des objets et dispositif pour sa mise en oeuvre

(30) Priorität: 22.04.1988 DE 3813725
(43) Veröffentlichungstag der Anmeldung: 25.10.1989
(73) Patentinhaber: Siemens Nixdorf Informationssysteme Aktiengesellschaft, 33102 Paderborn (DE)
(72) Erfinder: Baitz, Günter, D-1000 Berlin 27 (DE); Behling, Rudolf, D-2410 Mölln (DE)
(74) Vertreter: Fuchs, Franz-Josef, Dr.-Ing.

(56) Entgegenhaltungen:
- EP-A- 0 325 469
- DE-A- 3 114 139
- US-A- 3 873 812
- PATENT ABSTRACTS OF JAPAN vol. 8, no. 282 (P-323)(1719) 22 Dezember 1984,& JP-A-59 148805

## Beschreibung

### Beschreibung für folgende Vertragsstaaten : ES, IT, NL, SE

Die Erfindung betrifft ein Verfahren zum optischen Abtasten von Markierungen auf Gegenständen an einer Mehrzahl von Erfassungsplätzen, an denen die Gegenstände mittels einer Transportvorrichtung durch den Abtastbereich einer optischen Abtastvorrichtung transportiert werden.

Aus der DE-OS 31 14 139 ist ein vollautomatischer Etikettenablese- und Kassenverbund bekannt, in dem eine Registrierung von Produkten anhand einer Abtastvorrichtung erfolgt, die sich in einem Tunnel über einem Transportband befindet. Dieser Kassenverbund erlaubt prinzipiell das Registrieren von Produkten ohne Anwesenheit einer Kassiererin. Dies trifft jedoch nur bei ordnungsgemäßer Registrierung von Produkten zu. Wenn sich ein Produkt nicht maschinell erfassen läßt, muß eine Verkaufskraft eine manuelle Nacherfassung des nicht zu registrierenden Produktes an dem jeweiligen Arbeitsplatz durchführen. Dies ist zeitaufwendig, weil nun nicht mehr an jedem Arbeitsplatz eine Verkaufskraft zur Verfügung steht. Da diese Art von Kassenverbundsystemen vorwiegend in großen Verkaufsmärkten und Selbstbedienungsläden eingesetzt wird, in denen ein hoher Durchsatz von Produkten erfolgt, wird bei häufigeren manuellen Nachregistrierungsvorgängen die durch die vollautomatische Registrierung angestrebte Einsparung von Zeit und Personal zunichte gemacht.

Aus der JP-A-59148805 ist ferner ein Verfahren und eine Vorrichtung zum optischen Abtasten von Markierungen an Objekten bekannt, bei dem bzw. bei der die gelesenen Informationen einer Mustererkennung für Zeichen unterzogen werden. Wenn das gelesene Zeichen nicht automatisch identifiziert werden kann, wird es auf einem Bildschirm dargestellt, so daß eine Person das Zeichen identifizieren kann, oder es werden weitere Schritte veranlaßt.

Aufgabe der Erfindung ist es, ein Verfahren der gattungsgemäßen Art anzugeben, bei dem die Notwendigkeit einer manuellen Identifizierung und der mit dieser Nachidentifizierung verbundene Arbeitsaufwand geringer ist als bei der bekannten Lösung.

Diese Aufgabe wird erfindungsgemäß dadurch gelöst, daß ein Gegenstand bei nicht ordnungsgemäßer Abtastung automatisch zurück und wieder in den Abtastbereich der optischen Abtastvorrichtung transportiert und nach einer vorbestimmten Anzahl von vergeblichen Abtastversuchen selbsttätig auf einem Sichtgerät einer Zentrale zur Identifizierung der Gegenstände dargestellt und/oder eine Abbildung des nicht abtastbaren Gegenstandes in einem Speicher gespeichert wird.

Mit dem erfindungsgemäßen Verfahren wird erreicht, daß durch wiederholte Identifizierunasversuche die Wahrscheinlichkeit von Abtastfehlern verringert wird und daß auch durch wiederholtes Abtasten nicht identifizierbare Gegenstände an einem zentralen Arbeitsplatz von einer einzigen Arbeitskraft identifiziert werden können.

Durch die Abspeicherung der Abbildungen wird die Arbeitskraft in der Zentrale in die Lage versetzt, mehrere nicht erkannte Gegenstände, die von den Erfassungsplätzen gleichzeitig oder kurz nacheinander gemeldet werden, nacheinander zu bearbeiten. Auch ist es möglich, die Bearbeitung zu einem späteren Zeitpunkt vorzunehmen. Z.B. kann die Nacherfassung mit einer Kundennummer verknüpft werden, so daß dem Kunden eine Rechnung zugesandt werden kann.

In einer Weiterbildung des erfindungsgemäßen Verfahrens wird der Gegenstand während seines Transports durch den Abtastbereich und/oder während des Rücktransports nach einem vergeblichen Abtastversuch um wenigstens eine seiner Körperachsen gedreht. Dies hat den Vorteil, daß eine Identifikationsmarkierung, die sich zuvor in einer nicht lesbaren Stellung befunden hat, durch eine Drehung des Gegenstandes lesbar wird. Die Wahrscheinlichkeit, daß eine Identifikationsmarkierung nicht gelesen werden kann, wird durch diese Weiterbildung abermals verringert.

Wenn in dem erfindungsgemäßen Verfahren die optische Abtastvorrichtung und die Vorrichtung zur bildlichen Erfassung des Gegenstandes durch eine einzige elektronische Kamera gebildet ist, kann eine Erfassung des Gegenstandes vorteilhafterweise so erfolgen, daß während des Abtastvorganges der ganze Gegenstand von der Kamera erfaßt wird, daß das Kamerabild in dem Bildspeicher gespeichert wird, daß mittels eines an sich bekannten Mustererkennungsverfahrens der geometrische Ort der Markierung auf dem Gegenstand identifiziert wird, daß die elektronische Repräsentation des die Markierung enthaltenden Kamerabildes elektronisch abgetastet wird und daß nach einer vorbestimmten Anzahl von vergeblichen Mustererkennungs- bzw. Abtastversuchen das Kamerabild des Gegenstandes dem Sichtgerät zugeführt und/oder im Bildspeicher als nicht erkannt gekennzeichnet wird. Hierbei ist es vorteilhaft, wenn die elektronische Kamera schwenkbar und/oder mit einem Objektiv einstellbarer Brennweite ausgestattet ist, wobei die Brennweite des Oblekrives zunächst so eingestellt ist, daß die Kamera den ganzen Gegenstand erfaßt und daß nach der Identifizierung des geometrischen Orts der Markierung auf dem Gegenstand die Kamera so geschwenkt und/oder ihre Brennweite so eingestellt wird, daß im wesentlichen nur noch die Markierung von der Kamera erfaßt wird. Auch hierdurch wird die Wahrscheinlichkeit von Fehllesungen stark vermindert.

Eine zur Durchführung des vorstehend genannten Verfahrens geeignete Vorrichtung umfaßt in an sich bekannter Weise eine Mehrzahl von einer Zentrale zugeordneten Erfassungsplätzen, wobei jeder Erfassungsplatz mit je einer Transportvorrichtung für die zu identifizierenden Gegenstände, einem die Transportvorrichtung mindestens teilweise überdeckenden Tunnel und einer in dem Tunnel vorgesehenen optischen Abtastvorrichtung für auf den Gegenständen angeordneten Identifikationsmarkierungen versehen ist. Erfindungsgemäß ist diese Vorrichtung derart ausgebildet, daß die Transportvorrichtung in mindestens zwei einander nachgeordnete Förderbereiche mit je einer individuell steuerbaren Förderanordnung unterteilt ist, daß die Abtastvorrichtung im zweiten Förderbereich angeordnet ist, daß in Transportrichtung vor und nach der Abtastvorrichtung jeweils mindestens eine den Durchlauf eines Gegenstandes registrierende Sensoranordnung vorgesehen ist und daß im zweiten Förderbereich mindestens eine Kamera zur Abbildung in einem Speicher vorgesehen ist.

Die Unterteilung der Transportvorrichtung in zwei einander nachgeordnete,individuell steuerbare Förderbereiche hat den Zweck, daß auf dem ersten Förderbereich nur die Gegenstände auf die Transportvorrichtung aufgegeben und dem Abtastbereich zugeführt werden, während im zweiten Förderbereich nur die Identifizierung der Gegenstände erfolgt. Hierdurch ist es möglich, Gegenstände wiederholt in den Abtastbereich der optischen Abtastvorrichtung hineinzutransportieren, um so mehrere Versuche zur Identifizierung der Gegenstände durchführen zu können, wobei zwar ggf. die Förderanordnung im ersten Förderbereich angehalten werden muß, die Aufgabe von Gegenständen auf die erste Förderanordnung im allgemeinen aber nicht gestört wird.

Die in Transportrichtung vor dem Abtastbereich angeordnete Sensoranordnung kann zum Einschalten und die der Abtastvorrichtung nachgeordnete Sensoranordnung zum Abschalten der Abtastvorrichtung dienen. Durch die von den Sensoranordnungen erzeugten Signale und die vorgegebene Fördergeschwindigkeit der Förderanordnung im zweiten Förderbereich kann die Lage eines Gegenstandes im zweiten Förderbereich genau bestimmt werden. Die Sensoranordnungen steuern in Verbindung mit der Abtastvorrichtung die Hin- und Rückbewegung der zweiten Förderanordnung, indem der Gegenstand so oft in den Abtastbereich transportiert wird, bis die Abtastvorrichtung ein Identifizierungssignal abgibt oder bis eine vorbestimmte Anzahl von Fehlversuchen erreicht ist. Nach dieser vorbestimmten Anzahl von Versuchen wird ein nicht identifizierbarer Gegenstand in den Erfassungsbereich der Kamera transportiert. Vorteilhaft ist daher die Kamera der Abtastvorrichtung in Transportrichtung nachgeordnet, damit ein nicht identifizierbarer Gegenstand zur Abbildung auf dem Sichtgerät nicht noch einmal zurücktransportiert werden muß.

Die Sensoranordnungen können zum Beispiel Ultraschallsensoren, Infrarotsensoren oder eine Laserabtastung enthalten. In einer kostengünstigen Weiterbildung der erfindungsgemäßen Vorrichtung sind die Sensoranordnungen von Lichtschranken gebildet mit einem im wesentlichen quer zur Transportrichtung verlaufenden Strahlengang.

Die Steuerung der Förderanordnungen durch die Sensoranordnungen ist nur möglich, wenn die Produkte einzeln mit einem Abstand voneinander dem Förderband so zugeführt werden, daß die Sensoranordnungen in der Lage sind, jeden Gegenstand einzeln zu registrieren. In einer Weiterbildung der Erfindung können daher im ersten Förderbereich der Transportvorrichtung Mittel zur Vereinzelnung der zu registrierenden Gegenstände vorgesehen sein.

In einer schnell und sicher arbeitenden Ausführung der erfindsgemäßen Vorrichtung ist die optische Abtastvorrichtung von einem Strahlabtaster mit Strahlablenkung gebildet, bei dem die Ablenkgeschwindigkeit des Abtaststrahls mit der Fördergeschwindigkeit der Transportvorrichtung im zweiten Förderbereich korreliert ist. Hierdurch läßt sich das Verhältnis von Abtastgeschwindigkeit und Fördergeschwindigkeit bei unterschiedlichen Fördergeschwindigkeiten optimal einstellen. Die Abtastvorrichtung kann mehrere Strahlsender und/oder Spiegel umfassen, die so angeordnet sind, daß die zu registrierenden Gegenstände von allen Seiten her abgetastet werden können. Damit entfällt die Notwendigkeit,die zu registrierenden Gegenstände in einer bestimmten Lage auf die Transportvorrichtung aufzugeben. In Kombination mit der o.g. Drehung eines Gegenstandes während der Erfassung wird somit ein optimales Abtastverhalten erreicht.

Um eine Identifizierung sehr großer Gegenstände zu gewährleisten, ist in einer Weiterbildung der erfindungsgemäßen Vorrichtung die Kamera an einem relativ zur Transportebene höhenverstellbaren Träger angeordnet. Damit kann das Blickfeld der Kamera an die Größe des jeweils zu registrierenden Gegenstandes angepaßt werden. Wenn der Träger sich quer über die Transportvorrichtung erstreckt, kann an ihm auch eine Abtastvorrichtung oder ein Umlenkspiegel für einen Abtaststrahl angeordnet sein, so daß eine Abtastung eines zu registrierenden Gegenstandes von oben her möglich ist. Um eine Verstellung des Trägers in Abhängigkeit der Höhe eines Gegenstandes senkrecht zur Transportebene vornehmen zu können, ist es zweckmäßig, wenn in Transportrichtung vor der Abtastvorrichtung ein Fühler zum Abtasten der Höhe der auf der Transportvorrichtung geförderten Gegenstände vorgesehen ist, wobei die Höhenverstellung des Trägers dann in Abhängigkeit der vom Fühler erzeugten Signale steuerbar ist. Der Fühler kann einen Sender und einen Empfänger umfassen, die beide an dem Träger derart angeordnet sind, daß ein vom Sender im wesentlichen parallel zur Transportebene ausgesandter Taststrahl bei Reflexion an einem ankommenden Gegenstand auf den Empfänger fällt.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutern. Es zeigen:
- Fig. 1: eine teilschematische perspektivische Ansicht eines Arbeitsplatzes in einer erfindungsgemäßen Vorrichtung mit fünf Arbeitsplätzen,
- Fig. 2: eine der Figur 1 entsprechende Ansicht einer abgewandelten Ausführungsform der Erfindung und
- Fig. 3: einen schematischen Teilschnitt durch die in Figur 1 dargestellte Vorrichtung entlang der Linie III-III.

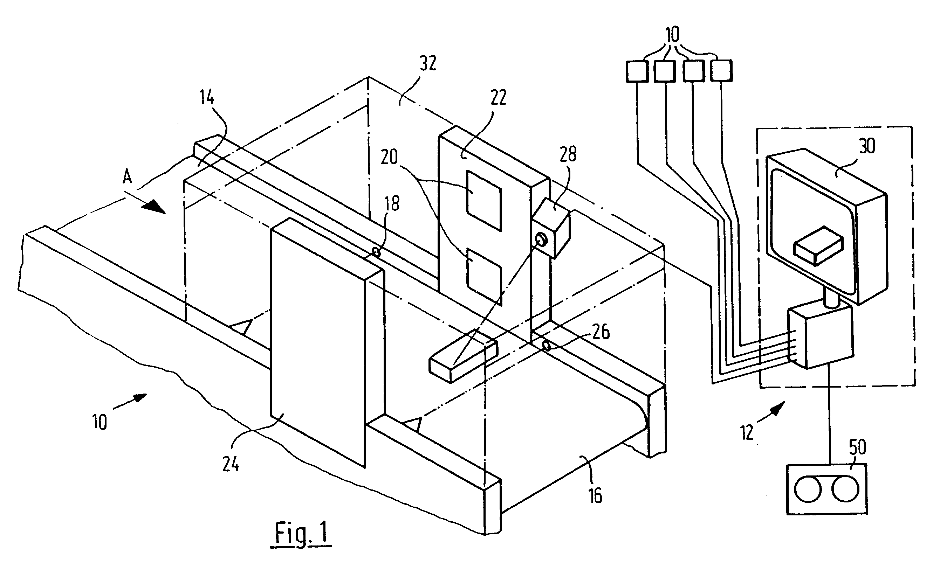

Figur 1 zeigt einen Erfassungsplatz 10 zur Identifizierung von Gegenständen, der an eine Zentrale 12 angeschlossen ist. Mit der Zentrale sind noch weitere identische Erfassungsplätze 10 verbunden. Der Erfassungsplatz 10 umfaßt eine Transportvorrichtung, bestehend aus zwei einander nachgeordneten Förderbändern 14,16. Das erste Förderband 14 dient der Aufgabe und Zuführung von Gegenständen zum zweiten Förderband, auf dem die Identifizierung der zugeführten Gegenstände erfolgen soll. Eine Identifizierung ist nur dann möglich, wenn die Gegenstände einzeln zugeführt werden, so daß eine am Beginn des zweiten Förderbandes angeordnete Lichtschranke 18 in der Lage ist, beim Durchgang jedes einzelnen Produktes ein Signal abzugeben.

Durch dieses Signal wird eine Abtastvorrichtung in Betrieb gesetzt, die in den Figuren 1 bis 3 durch Flächen 20 angedeutet ist. Diese Flächen 20 können Spiegel sein, an denen ein zentral erzeugter Abtaststrahl reflektiert wird. Es können aber auch Fenster sein, hinter denen jeweils ein Strahlsender angeordnet ist. Diese Flächen 20 sind bei der Anordnung gemäß Figur 1 an den einander zugewandten Innenseiten zweier senkrecht nach oben weisender Stützen 22,24 angeordnet, die sich in Transportrichtung A auf gleicher Höhe beiderseits des zweiten Förderbandes 16 befinden. Durch die Abtastvorrichtung 20 erfolgt die Abtastung einer Markierung auf einem Gegenstand 25, die dessen Identifizierung ermöglicht. Dieser durchläuft daraufhin eine zweite Lichtschranke 26, die signalisiert, daß der Gegenstand den Abtastbereich der Abtastvorrichtung 20 verlassen hat. Durch dieses Signal kann zum Beispiel die Abtastvorrichtung 20 abgeschaltet werden, wenn die erste Lichtschranke 18 keine Zuführung weiterer Gegenstände signalisiert. Am Ende des zweiten Förderbandes 16 können die identifizierten Gegenstände der Transportvorrichtung entnommen werden oder auf eine nicht dargestellte rutschenartige Zwischenablage geführt werden.

Wird ein von der Lichtschranke 18 als zugeführt signalisierter Gegenstand von der Abtastvorrichtung 20 nicht identifiziert, so wird die Laufrichtung des zweiten Förderbandes 16 beim Durchlauf des Gegenstandes 25 durch die zweite Lichtschranke 26 umgeschaltet und der Gegenstand 25 wieder zur ersten Lichtschranke 18 zurückgefördert, um nach abermaligem Umschalten des zweiten Förderbandes 16 erneut in Transportrichtung A den Abtastbereich der Abtastvorrichtung 20 zu durchlaufen. Führt dies nach einer vorbestimmten Anzahl von Versuchen nicht zum Erfolg, so wird das Band gesteuert durch Lichtschranken 18 und 26 angehalten, wenn sich der Gegenstand in dem Erfassungsbereich einer Kamera 28 befindet, die mit der Zentrale 12 verbunden ist. Auf einem in der Zentrale 12 angeordneten Sichtgerät 30 wird der nicht identifizierbare Gegenstand zur nachträglichen Identifizierung abgebildet. Dabei kann die Identifizierung von einer Person vorgenommen werden. Es besteht jedoch auch die Möglichkeit, das von der Kamera gelieferte Bild automatisch auszuwerten und dadurch die Identifizierung des Gegenstandes vorzunehmen. Ist dies erfolgt, so wird der nachträglich identifizierte Gegenstand an das Ende des zweiten Förderbandes 16 transportiert, wo er zum Beispiel der Transportvorrichtung entnommen werden kann. Die Zentrale 12 ist mit einer Vielzahl von Vorrichtungen 10 der vorstehend genannten Art verbunden, wodurch die Nachidentifizierung von durch die Abtasteinrichtung nicht identifizierten Gegenständen für mehrere Erfassungsplätze 10 zentral vorgenommen werden kann.

Ferner ist an die Zentrale 12 ein Bildspeicher 50 angeschlossen. In diesem werden die Abbildungen der nicht identifizierten Gegenstände zusammen mit einer Information darüber, von welchem Erfassungsplatz 10 das erfaßte Bild stammt, abgespeichert. Die Nacherfassung und Zuordnung zum Erfassungsplatz 10 kann dann sequentiell vorgenommen werden.

Der Bereich über dem zweiten Förderband 16 ist durch ein tunnelartiges Gehäuse 32 abgedeckt, um eine Gefährdung von umstehenden Personen durch Abtaststrahlen auszuschließen.

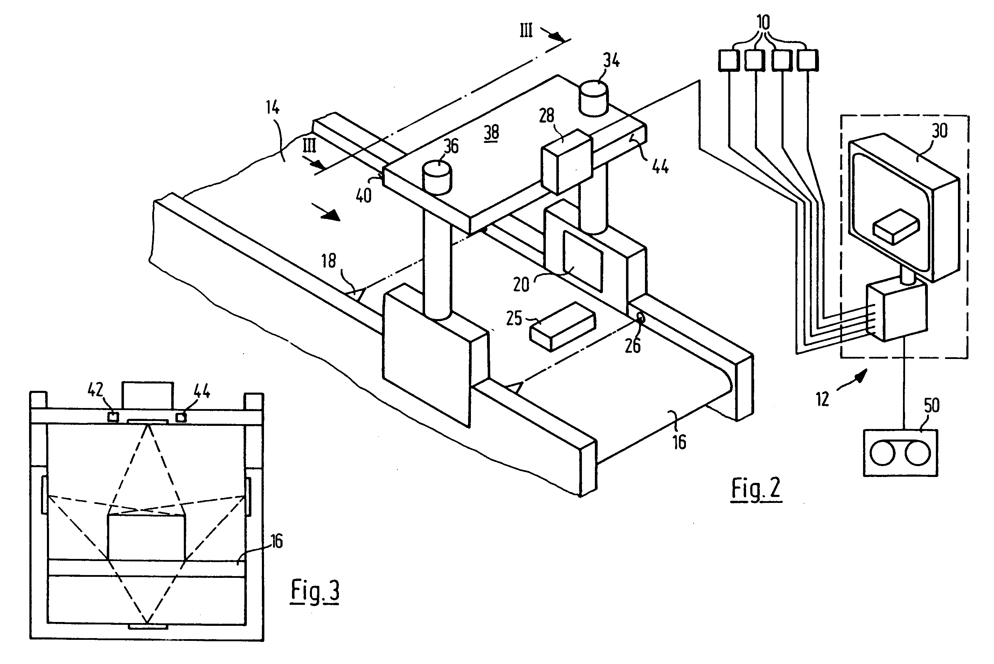

Bei der in Figur 2 dargestellten Ausführungsform sind gleiche Teile wiederum mit gleichen Bezugszeichen versehen. Bei dieser Ausführungsform wurde das tunnelförmige Gehäuse 32 der besseren Übersicht halber weggelassen. Bei dieser Ausführungsform haben die Stützen 22, 24 gegenüber den Stützen 22, 24 der Ausführungsform gemäß Figur 1 eine geringere Höhe und weisen auf ihren oberen Endflächen jeweils eine zylindrische Führung 34, 36 auf. Diese zylindrischen Führungen 34, 36 durchsetzen zwei komplementäre Bohrungen in einer Trägerplatte 38. Diese ist an den Führungen 34, 36 mittels eines nicht dargestellten Antriebes höhenverstellbar. An der Trägerplatte 38 ist die Kamera 28 befestigt. Auf diese Weise kann die Kamera abhängig von der Höhe der zu identifizierenden Gegenstände näher an das Transportband 16 heran oder von der Transportebene weg verstellt werden, um den Bildwinkel der Kamera auf eine optimale Abbildung des Gegenstandes einzustellen. Dies gilt auch für eine weitere Spiegelfläche oder einen weiteren Strahlsender 20, der an der dem Transportband 16 zugewandten Unterseite der Trägerplatte 38 angeordnet ist, wie dies in Figur 3 zu erkennen ist. Figur 3 zeigt ferner einen weiteren Strahlsender oder einen weiteren Spiegel 20 unterhalb des Förderbandes 16, das in diesem Falle für die jeweilige Strahlart transparent sein muß. Somit kann auch eine an der Unterseite eines Gegenstandes angebrachte Markierung abgetastet werden.

An der dem ersten Förderband 14 zugewandten Randfläche 40 der Trägerplatte 38 ist eine in Figur 3 zu erkennende Sensoranordnung angeordnet, die ein Senderelement 42 und ein Empfängerelement 44 umfaßt. Die Ausbildung der Sensoren ist so getroffen, daß das Senderelement einen Taststrahl parallel zur Oberfläche der Förderbänder 14 und 16 aussendet. Trifft dieser Taststrahl auf einen Gegenstand auf dem Förderband 14, so wird er an diesem Gegenstand reflektiert und vom Empfängerelement 44 registriert. Dies führt zu einem Steuersignal an den Antrieb für die Trägerplatte 38, um diese so weit zu verstellen, bis der Taststrahl nicht mehr reflektiert wird, so daß der Gegenstand unter der Trägerplatte 38 hindurchlaufen und von der Kamera 28 abgebildet werden kann.

### Beschreibung für folgende Vertragsstaaten : DE, FR, GB

Die Erfindung betrifft ein Verfahren zum optischen Abtasten von Markierungen auf Gegenständen an einer Mehrzahl von Erfassungsplätzen,an denen die Gegenstände mittels einer Transportvorrichtung durch den Abtastbereich einer optischen Abtastvorrichtung transportiert werden.

Aus der DE-OS 31 14 139 ist ein vollautomatischer Etikettenablese- und Kassenverbund bekannt, in dem eine Registrierung von Produkten anhand einer Abtastvorrichtung erfolgt, die sich in einem Tunnel über einem Transportband befindet. Dieser Kassenverbund erlaubt prinzipiell das Registrieren von Produkten ohne Anwesenheit einer Kassiererin. Dies trifft jedoch nur bei ordnungsgemäßer Registrierung von Produkten zu. Wenn sich ein Produkt nicht maschinell erfassen läßt, muß eine Verkaufskraft eine manuelle Nacherfassung des nicht zu registrierenden Produktes an dem jeweiligen Arbeitsplatz durchführen. Dies ist zeitaufwendig, weil nun nicht mehr an jedem Arbeitsplatz eine Verkaufskraft zur Verfügung steht. Da diese Art von Kassenverbundsystemen vorviegend in großen Verkaufsmärkten und Selbstbedienungsläden eingesetzt wird, in denen ein hoher Durchsatz von Produkten erfolgt, wird bei häufigeren manuellen Nachregistrierungsvorgängen die durch die vollautomatische Registrierung angestrebte Einsparung von Zeit und Personal zunichte gemacht.

Weiterhin ist aus der EP 0 325 469 A2 (Stand der Technik gemäß Artikel 54(3) EPÜ) ein Verfahren bzw. eine Vorrichtung zum optischen Abtasten von Markierungen bekannt. Wenn die Zeichen einer Markierung nicht lesbar sind, wird der abzutastende Gegenstand wieder in den Abtastbereich transportiert und erneut abgetastet. Falls auch ein erneutes Abtasten zu keinem positiven Ergebnis führt, wird der Gegenstand mittels einer Videokamera dargestellt bzw. aufgezeichnet. Anhand der Aufzeichnung kann dann eine Bedienperson eine Zeichenerkennung vornehmen.

Aus der JP-A-59148805 ist ferner ein Verfahren und eine Vorrichtung zum optischen Abtasten von Markierungen an Objekten bekannt, bei dem bzw. bei der die gelesenen Informationen einer Mustererkennung für Zeichen unterzogen werden. Wenn das gelesene Zeichen nicht automatisch identifiziert werden kann, wird es auf einem Bildschirm dargestellt, so daß eine Person das Zeichen identifizieren kann, oder es werden weitere Schritte veranlaßt.

Aufgabe der Erfindung ist es, ein Verfahren der gattungsgemäßen Art anzugeben, bei dem die Notwendigkeit einer manuellen Identifizierung und der mit dieser Nachidentifizierung verbundene Arbeitsaufwand verringert ist.

Diese Aufgabe wird durch die Merkmale des Anspruchs 1 und des Anspruchs 4 gelöst. Vorteilhafte Weiterbildungen der Erfindung sind in den abhängigen Ansprüchen angegeben.

Mit dem erfindungsgemäßen Verfahren wird erreicht, daß durch wiederholte Identifizierungsversuche die Wahrscheinlichkeit von Abtastfehlern verringert wird und daß auch durch wiederholtes Abtasten nicht identifizierbare Gegenstände an einem zentralen Arbeitsplatz von einer einzigen Arbeitskraft identifiziert werden können.

Durch die Abspeicherung der Abbildungen wird die Arbeitskraft in der Zentrale in die Lage versetzt, mehrere nicht erkannte Gegenstände, die von den Erfassungsplätzen gleichzeitig oder kurz nacheinander gemeldet werden, nacheinander zu bearbeiten. Auch ist es möglich, die Bearbeitung zu einem späteren Zeitpunkt vorzunehmen. Z.B. kann die Nacherfassung mit einer Kundennummer verknüpft werden, so daß dem Kunden eine Rechnung zugesandt werden kann.

In einer Weiterbildung des erfindungsgemäßen Verfahrens wird der Gegenstand während seines Transports durch den Abtastbereich und/oder während des Rücktransports nach einem vergeblichen Abtastversuch um wenigstens eine seiner Körperachsen gedreht. Dies hat den Vorteil, daß eine Identifikationsmarkierung, die sich zuvor in einer nicht lesbaren Stellung befunden hat, durch eine Drehung des Gegenstandes lesbar wird. Die Wahrscheinlichkeit, daß eine Identifikationsmarkierung nicht gelesen werden kann, wird durch diese Weiterbildung abermals verringert.

Da bei dem erfindungsgemäßen Verfahren die optische Abtastvorrichtung und die Vorrichtung zur bildlichen Erfassung des Gegenstandes durch eine einzige elektronische Kamera gebildet ist, kann eine Erfassung des Gegenstandes vorteilhafterweise so erfolgen, daß während des Abtastvorganges der ganze Gegenstand von der Kamera erfaßt wird, daß das Kamerabild in dem Bildspeicher gespeichert wird, daß mittels eines an sich bekannten Mustererkennungsverfahrens der geometrische Ort der Markierung auf dem Gegenstand identifiziert wird, daß die elektronische Repräsentation des die Markierung enthaltenden Kamerabildes elektronisch abgetastet wird und daß nach einer vorbestimmten Anzahl von vergeblichen Mustererkennungs- bzw. Abtastversuchen das Kamerabild des Gegenstandes dem Sichtgerät zugeführt und/oder im Bildspeicher als nicht erkannt gekennzeichnet wird. Hierbei ist es vorteilhaft, wenn die elektronische Kamera schwenkbar und/oder mit einem Objektiv einstellbarer Brennweite ausgestattet ist, wobei die Brennweite des Objektives zunächst so eingestellt ist, daß die Kamera den ganzen Gegenstand erfaßt und daß nach der Identifizierung des geometrischen Orts der Markierung auf dem Gegenstand die Kamera so geschwenkt und/oder ihre Brennweite so eingestellt wird, daß im wesentlichen nur noch die Markierung von der Kamera erfaßt wird. Auch hierdurch wird die Wahrscheinlichkeit von Fehllesungen stark vermindert.

Eine zur Durchführung des vorstehend genannten Verfahrens geeignete Vorrichtung umfaßt in an sich bekannter Weise eine Mehrzahl von einer Zentrale zugeordneten Erfassungsplätzen, wobei jeder Erfassungsplatz mit je einer Transportvorrichtung für die zu identifizierenden Gegenstände, einem die Transportvorrichtung mindestens teilweise überdeckenden Tunnel und einer in dem Tunnel vorgesehenen optischen Abtastvorrichtung für auf den Gegenständen angeordneten Identifikationsmarkierungen versehen ist. Erfindungsgemäß ist diese Vorrichtung derart ausgebildet, daß die Transportvorrichtung in mindestens zwei einander nachgeordnete Förderbereiche mit je einer individuell steuerbaren Förderanordnung unterteilt ist, daß die Abtastvorrichtung im zweiten Förderbereich angeordnet ist, daß in Transportrichtung vor und nach der Abtastvorrichtung jeweils mindestens eine den Durchlauf eines Gegenstandes registrierende Sensoranordnung vorgesehen ist und daß im zweiten Förderbereich mindestens eine Kamera zur Abbildung in einem Speicher vorgesehen ist.

Die Unterteilung der Transportvorrichtung in zwei einander nachgeordnete,individuell steuerbare Förderbereiche hat den Zweck, daß auf dem ersten Förderbereich nur die Gegenstände auf die Transportvorrichtung aufgegeben und dem Abtastbereich zugeführt werden, während im zweiten Förderbereich nur die Identifizierung der Gegenstände erfolgt. Hierdurch ist es möglich, Gegenstände wiederholt in den Abtastbereich der optischen Abtastvorrichtung hineinzutransportieren, um so mehrere Versuche zur Identifizierung der Gegenstände durchführen zu können, wobei zwar ggf. die Förderanordnung im ersten Förderbereich angehalten werden muß, die Aufgabe von Gegenständen auf die erste Förderanordnung im allgemeinen aber nicht gestört wird.

Die in Transportrichtung vor dem Abtastbereich angeordnete Sensoranordnung kann zum Einschalten und die der Abtastvorrichtung nachgeordnete Sensoranordnung zum Abschalten der Abtastvorrichtung dienen. Durch die von den Sensoranordnungen erzeugten Signale und die vorgegebene Fördergeschwindigkeit der Förderanordnung im zweiten Förderbereich kann die Lage eines Gegenstandes im zweiten Förderbereich genau bestimmt werden. Die Sensoranordnungen steuern in Verbindung mit der Abtastvorrichtung die Hin- und Rückbewegung der zweiten Förderanordnung, indem der Gegenstand so oft in den Abtastbereich transportiert wird, bis die Abtastvorrichtung ein Identifizierungssignal abgibt oder bis eine vorbestimmte Anzahl von Fehlversuchen erreicht ist. Nach dieser vorbestimmten Anzahl von Versuchen wird ein nicht identifizierbarer Gegenstand in den Erfassungsbereich der Kamera transportiert. Vorteilhaft ist daher die Kamera der Abtastvorrichtung in Transportrichtung nachgeordnet, damit ein nicht identifizierbarer Gegenstand zur Abbildung auf dem Sichtgerät nicht noch einmal zurücktransportiert werden muß.

Die Sensoranordnungen können zum Beispiel Ultraschallsensoren, Infrarotsensoren oder eine Laserabtastung enthalten. In einer kostengünstigen Weiterbildung der erfindungsgemäßen Vorrichtung sind die Sensoranordnungen von Lichtschranken gebildet mit einem im wesentlichen quer zur Transportrichtung verlaufenden Strahlengang.

Die Steuerung der Förderanordnungen durch die Sensoranordnungen ist nur möglich, wenn die Produkte einzeln mit einem Abstand voneinander dem Förderband so zugeführt werden, daß die Sensoranordnungen in der Lage sind, jeden Gegenstand einzeln zu registrieren. In einer Weiterbildung der Erfindung können daher im ersten Förderbereich der Transportvorrichtung Mittel zur Vereinzelnung der zu registrierenden Gegenstände vorgesehen sein.

In einer schnell und sicher arbeitenden Ausführung der erfindsgemäßen Vorrichtung ist die optische Abtastvorrichtung von einem Strahlabtaster mit Strahlablenkung gebildet, bei dem die Ablenkgeschwindigkeit des Abtaststrahls mit der Fördergeschwindigkeit der Transportvorrichtung im zweiten Förderbereich korreliert ist. Hierdurch läßt sich das Verhältnis von Abtastgeschwindigkeit und Fördergeschwindigkeit bei unterschiedlichen Fördergeschwindigkeiten optimal einstellen. Die Abtastvorrichtung kann mehrere Strahlsender und/oder Spiegel umfassen, die so angeordnet sind, daß die zu registrierenden Gegenstände von allen Seiten her abgetastet werden können. Damit entfällt die Notwendigkeit,die zu registrierenden Gegenstände in einer bestimmten Lage auf die Transportvorrichtung aufzugeben. In Kombination mit der o.g. Drehung eines Gegenstandes während der Erfassung wird somit ein optimales Abtastverhalten erreicht.

Um eine Identifizierung sehr großer Gegenstände zu gewährleisten, ist in einer Weiterbildung der erfindungsgemäßen Vorrichtung die Kamera an einem relativ zur Transportebene höhenverstellbaren Träger angeordnet. Damit kann das Blickfeld der Kamera an die Größe des jeweils zu registrierenden Gegenstandes angepaßt werden. Wenn der Träger sich quer über die Transportvorrichtung erstreckt, kann an ihm auch eine Abtastvorrichtung oder ein Umlenkspiegel für einen Abtaststrahl angeordnet sein, so daß eine Abtastung eines zu registrierenden Gegenstandes von oben her möglich ist. Um eine Verstellung des Trägers in Abhängigkeit der Höhe eines Gegenstandes senkrecht zur Transportebene vornehmen zu können, ist es zweckmäßig, wenn in Transportrichtung vor der Abtastvorrichtung ein Fühler zum Abtasten der Höhe der auf der Transportvorrichtung geförderten Gegenstände vorgesehen ist, wobei die Höhenverstellung des Trägers dann in Abhängigkeit der vom Fühler erzeugten Signale steuerbar ist. Der Fühler kann einen Sender und einen Empfänger umfassen, die beide an dem Träger derart angeordnet sind, daß ein vom Sender im wesentlichen parallel zur Transportebene ausgesandter Taststrahl bei Reflexion an einem ankommenden Gegenstand auf den Empfänger fällt.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutern. Es zeigen:
- Fig. 1: eine teilschematische perspektivische Ansicht eines Arbeitsplatzes in einer erfindungsgemäßen Vorrichtung mit fünf Arbeitsplätzen,
- Fig. 2: eine der Figur 1 entsprechende Ansicht einer abgewandelten Ausführungsform der Erfindung und
- Fig. 3: einen schematischen Teilschnitt durch die in Figur 1 dargestellte Vorrichtung entlang der Linie III-III.

Figur 1 zeigt einen Erfassungsplatz 10 zur Identifizierung von Gegenständen, der an eine Zentrale 12 angeschlossen ist. Mit der Zentrale sind noch weitere identische Erfassungsplätze 10 verbunden. Der Erfassungsplatz 10 umfaßt eine Transportvorrichtung, bestehend aus zwei einander nachgeordneten Förderbändern 14,16. Das erste Förderband 14 dient der Aufgabe und Zuführung von Gegenständen zum zweiten Förderband, auf dem die Identifizierung der zugeführten Gegenstände erfolgen soll. Eine Identifizierung ist nur dann möglich, wenn die Gegenstände einzeln zugeführt werden, so daß eine am Beginn des zweiten Förderbandes angeordnete Lichtschranke 18 in der Lage ist, beim Durchgang jedes einzelnen Produktes ein Signal abzugeben.

Durch dieses Signal wird eine Abtastvorrichtung in Betrieb gesetzt, die in den Figuren 1 bis 3 durch Flächen 20 angedeutet ist. Diese Flächen 20 können Spiegel sein, an denen ein zentral erzeugter Abtaststrahl reflektiert wird. Es können aber auch Fenster sein, hinter denen jeweils ein Strahlsender angeordnet ist. Diese Flächen 20 sind bei der Anordnung gemäß Figur 1 an den einander zugewandten Innenseiten zweier senkrecht nach oben weisender Stützen 22,24 angeordnet, die sich in Transportrichtung A auf gleicher Höhe beiderseits des zweiten Förderbandes 16 befinden. Durch die Abtastvorrichtung 20 erfolgt die Abtastung einer Markierung auf einem Gegenstand 25, die dessen Identifizierung ermöglicht. Dieser durchläuft daraufhin eine zweite Lichtschranke 26, die signalisiert, daß der Gegenstand den Abtastbereich der Abtastvorrichtung 20 verlassen hat. Durch dieses Signal kann zum Beispiel die Abtastvorrichtung 20 abgeschaltet werden, wenn die erste Lichtschranke 18 keine Zuführung weiterer Gegenstände signalisiert. Am Ende des zweiten Förderbandes 16 können die identifizierten Gegenstände der Transportvorrichtung entnommen werden oder auf eine nicht dargestellte rutschenartige Zwischenablage geführt werden.

Wird ein von der Lichtschranke 18 als zugeführt signalisierter Gegenstand von der Abtastvorrichtung 20 nicht identifiziert, so wird die Laufrichtung des zweiten Förderbandes 16 beim Durchlauf des Gegenstandes 25 durch die zweite Lichtschranke 26 umgeschaltet und der Gegenstand 25 wieder zur ersten Lichtschranke 18 zurückgefördert, um nach abermaligem Umschalten des zweiten Förderbandes 16 erneut in Transportrichtung A den Abtastbereich der Abtastvorrichtung 20 zu durchlaufen. Führt dies nach einer vorbestimmten Anzahl von Versuchen nicht zum Erfolg, so wird das Band gesteuert durch Lichtschranken 18 und 26 angehalten, wenn sich der Gegenstand in dem Erfassungsbereich einer Kamera 28 befindet, die mit der Zentrale 12 verbunden ist. Auf einem in der Zentrale 12 angeordneten Sichtgerät 30 wird der nicht identifizierbare Gegenstand zur nachträglichen Identifizierung abgebildet. Dabei kann die Identifizierung von einer Person vorgenommen werden. Es besteht jedoch auch die Möglichkeit, das von der Kamera gelieferte Bild automatisch auszuwerten und dadurch die Identifizierung des Gegenstandes vorzunehmen. Ist dies erfolgt, so wird der nachträglich identifizierte Gegenstand an das Ende des zweiten Förderbandes 16 transportiert, wo er zum Beispiel der Transportvorrichtung entnommen werden kann. Die Zentrale 12 ist mit einer Vielzahl von Vorrichtungen 10 der vorstehend genannten Art verbunden, wodurch die Nachidentifizierung von durch die Abtasteinrichtung nicht identifizierten Gegenständen für mehrere Erfassungsplätze 10 zentral vorgenommen werden kann.

Ferner ist an die Zentrale 12 ein Bildspeicher 50 angeschlossen. In diesem werden die Abbildungen der nicht identifizierten Gegenstände zusammen mit einer Information darüber, von welchem Erfassungsplatz 10 das erfaßte Bild stammt, abgespeichert. Die Nacherfassung und Zuordnung zum Erfassungsplatz 10 kann dann sequentiell vorgenommen werden.

Der Bereich über dem zweiten Förderband 16 ist durch ein tunnelartiges Gehäuse 32 abgedeckt, um eine Gefährdung von umstehenden Personen durch Abtaststrahlen auszuschließen.

Bei der in Figur 2 dargestellten Ausführungsform sind gleiche Teile wiederum mit gleichen Bezugszeichen versehen. Bei dieser Ausführungsform wurde das tunnelförmige Gehäuse 32 der besseren Übersicht halber weggelassen. Bei dieser Ausführungsform haben die Stützen 22, 24 gegenüber den Stützen 22, 24 der Ausführungsform gemäß Figur 1 eine geringere Höhe und weisen auf ihren oberen Endflächen jeweils eine zylindrische Führung 34, 36 auf. Diese zylindrischen Führungen 34, 36 durchsetzen zwei komplementäre Bohrungen in einer Trägerplatte 38. Diese ist an den Führungen 34, 36 mittels eines nicht dargestellten Antriebes höhenverstellbar. An der Trägerplatte 38 ist die Kamera 28 befestigt. Auf diese Weise kann die Kamera abhängig von der Höhe der zu identifizierenden Gegenstände näher an das Transportband 16 heran oder von der Transportebene weg verstellt werden, um den Bildwinkel der Kamera auf eine optimale Abbildung des Gegenstandes einzustellen. Dies gilt auch für eine weitere Spiegelfläche oder einen weiteren Strahlsender 20, der an der dem Transportband 16 zugewandten Unterseite der Trägerplatte 38 angeordnet ist, wie dies in Figur 3 zu erkennen ist. Figur 3 zeigt ferner einen weiteren Strahlsender oder einen weiteren Spiegel 20 unterhalb des Förderbandes 16, das in diesem Falle für die jeweilige Strahlart transparent sein muß. Somit kann auch eine an der Unterseite eines Gegenstandes angebrachte Markierung abgetastet werden.

An der dem ersten Förderband 14 zugewandten Randfläche 40 der Trägerplatte 38 ist eine in Figur 3 zu erkennende Sensoranordnung angeordnet, die ein Senderelement 42 und ein Empfängerelement 44 umfaßt. Die Ausbildung der Sensoren ist so getroffen, daß das Senderelement einen Taststrahl parallel zur Oberfläche der Förderbänder 14 und 16 aussendet. Trifft dieser Taststrahl auf einen Gegenstand auf dem Förderband 14, so wird er an diesem Gegenstand reflektiert und vom Empfängerelement 44 registriert. Dies führt zu einem Steuersignal an den Antrieb für die Trägerplatte 38, um diese so weit zu verstellen, bis der Taststrahl nicht mehr reflektiert wird, so daß der Gegenstand unter der Trägerplatte 38 hindurchlaufen und von der Kamera 28 abgebildet werden kann.

## Patentansprüche (Patentansprüche für folgende(n) Vertragsstaat(en): ES, IT, NL, SE)

1. Verfahren zum optischen Abtasten von Markierungen auf Gegenständen an einer Mehrzahl von Erfassungsplätzen,an denen die Gegenstände mittels einer Transportvorrichtung durch den Abtastbereich einer optischen Abtastvorrichtung transportiert werden, dadurch **gekennzeichnet,** daß ein Gegenstand bei nicht ordnungsgemäßer Abtastung automatisch zurück und wieder in den Abtastbereich der optischen Abtastvorrichtung (20) transportiert und nach einer vorbestimmten Anzahl von vergeblichen Abtastversuchen selbsttätig auf einem Sichtgerät (30) einer Zentrale (12) zur Identifizierung der Gegenstände dargestellt und/oder eine Abbildung des nicht abtastbaren Gegenstandes in einem Speicher (50) gespeichert wird.

2. Verfahren nach Anspruch 1, dadurch **gekennzeichnet,** daß der Gegenstand während seines Transports durch den Abtastbereich und/oder während des Rücktransports nach einem vergeblichen Abtastversuch um wenigstens eine seiner Körperachsen gedreht wird.

3. Verfahren nach Anspruch 1 oder 2, bei dem die optische Abtastung und die bildliche Erfassung des Gegenstandes durch eine einzige elektronische Kamera erfolgt, dadurch **gekennzeichnet,** daß während des Abtastvorganges der ganze Gegenstand von der Kamera (28) erfaßt wird, daß das Kamerabild in dem Bildspeicher gespeichert wird, daß mittels eines an sich bekannten Mustererkennungsverfahrens der geometrische Ort der Markierung auf dem Gegenstand identifiziert wird, daß die elektronische Repräsentation des die Markierung enthaltenden Kamerabildes elektronisch abgetastet wird und daß nach einer vorbestimmten Anzahl von vergeblichen Mustererkennungs bzw. Abtastversuchen das Kamerabild des Gegenstandes dem Sichtgerät (30) zugeführt und/oder im Bildspeicher (50) als nicht erkannt gekennzeichnet wird.

4. Verfahren nach Anspruch 3, bei dem die elektronische Kamera schwenkbar und/oder mit einem Objektiv einstellbarer Brennweite (Zoom) ausgestattet ist, dadurch **gekennzeichnet,** daß die Brennweite des Objektivs zunächst so eingestellt ist, daß die Kamera (28) den ganzen Gegenstand erfaßt und daß nach der Identifizierung des geometrischen Orts der Markierung auf dem Gegegenstand die Kamera (28) so geschwenkt und/oder ihre Brennweite so eingestellt wird, daß im wesentlichen nur noch die Markierung von der Kamera (28) erfaßt wird.

5. Vorrichtung zur Durchführung eines Verfahrens nach einem der Ansprüche 1 bis 4, umfassend eine Mehrzahl von einer Zentrale (12) zugeordneten Erfassungsplätzen (10) mit je einer Transportvorrichtung (14, 16) für die zu identifizierenden Gegenstände, einem die Transportvorrichtung (14, 16) mindestens teilweise überdeckenden Tunnel (32) und einer in dem Tunnel (32) vorgesehenen optischen Abtastvorrichtung (20) für auf den Gegenständen vorgesehene Identifikationsmarkierungen, dadurch **gekennzeichnet,** daß die Transportvorrichtung in mindestens zwei einander nachgeordnete Förderbereiche mit je einer individuell steuerbaren Förderanordnung (14, 16) unterteilt ist, daß die Abtastvorrichtung (20) im zweiten Förderbereich angeordnet ist, daß in Transportrichtung (A) vor und nach der Abtastvorrichtung (20) jeweils mindestens eine den Durchlauf eines Gegenstandes (25) registrierende Sensoranordnung (18, 26) vorgesehen ist und daß im zweiten Förderbereich mindestens eine Kamera (28) zur Abbildung eines Gegenstandes (25) auf einem in der Zentrale (12) angeordneten Sichtgerät (30) und/oder zur Abspeicherung der Abbildung in einem Speicher (50) vorgesehen ist.

6. Vorrichtung nach Anspruch 5, dadurch **gekennzeichnet,** daß die Kamera (28) der Abtastvorrichtung (20) in Transportrichtung (A) nachgeordnet ist.

7. Vorrichtung nach Anspruch 5 oder 6, dadurch **gekennzeichnet,** daß im ersten Förderbereich der Transportvorrichtung (14, 16) Mittel zur Vereinzelung von Gegenständen vorgesehen sind.

8. Vorrichtung nach einem der Ansprüche 5 bis 7, dadurch **gekennzeichnet,** daß die Sensoranordnungen (18, 26) Lichtschranken mit einem im wesentlichen quer zur Transportrichtung (A) verlaufenden Strahlengang sind.

9. Vorrichtung nach einem der Ansprüche 5 bis 8, dadurch **gekennzeichnet,** daß die optische Abtastvorrichtung (20) mindestens einen Strahlabtaster mit Strahlablenkung umfaßt, bei dem die Ablenkgeschwindigkeit des Abtaststrahls mit der Fördergeschwindigkeit der Transportvorrichtung (14, 16) im zweiten Förderbereich korreliert ist.

10. Vorrichtung nach einem der Ansprüche 5 bis 9, dadurch **gekennzeichnet,** daß die Kamera (28) an einem relativ zur Transportebene höhenverstellbaren Träger (38) angeordnet ist.

11. Vorrichtung nach Anspruch 10, dadurch **gekennzeichnet,** daß der Träger (38) sich quer über die Transportvorrichtung (16) erstreckt und daß mindestens eine Abtastvorrichtung (20) oder Umlenkvorrichtung für einen Abtaststrahl an dem Träger (38) angeordnet ist.

12. Vorrichtung nach Anspruch 10 oder 11, dadurch **gekennzeichnet,** daß in Transportrichtung (A) vor der Abtastvorrichtung ein Fühler (42, 44) zum Abtasten der Höhe der auf der Transportvorrichtung (16) geförderten Gegenstände vorgesehen ist und daß die Höhenverstellung des Trägers (38) in Abhängigkeit der vom Fühler (42, 44) erzeugten Signale steuerbar ist.

13. Vorrichtung nach Anspruch 12,dadurch **gekennzeichnet,** daß der Fühler einen Sender (42) und einen Empfänger (44) umfaßt, die beide an dem Träger (38) derart angeordnet sind, daß ein vom Sender (42) im wesentlichen parallel zur Transportebene ausgesandter Taststrahl bei Reflexion an einem ankommenden Gegenstand auf den Empfänger (44) fällt.

## Patentansprüche (Patentansprüche für folgende(n) Vertragsstaat(en): DE, FR, GB)

1. Verfahren zum optischen Abtasten von Markierungen auf Gegenständen an einer Mehrzahl von Erfassungsplätzen, an denen die Gegenstände mittels einer Transportvorrichtung durch den Abtastbereich einer optischen Abtastvorrichtung transportiert werden, dadurch **gekennzeichnet,** daß ein Gegenstand bei nicht ordnungsgemäßer Abtastung automatisch zurück und wieder in den Abtastbereich der optischen Abtastvorrichtung (20) transportiert und nach einer vorbestimmten Anzahl von vergeblichen Abtastversuchen selbsttätig auf einem Sichtgerät (30) einer Zentrale (12) zur Identifizierung der Gegenstände dargestellt und/oder eine Abbildung des nicht abtastbaren Gegenstandes in einem Bildspeicher (50) gespeichert wird, daß die optische Abtastung und die bildliche Erfassung des Gegenstandes durch eine einzige elektronische Kamera erfolgt, daß während des Abtastvorganges der ganze Gegenstand von der Kamera (28) erfaßt wird, daß das Kamerabild in dem Bildspeicher (50) gespeichert wird, daß mittels eines an sich bekannten Mustererkennungsverfahrens der geometrische Ort der Markierung auf dem Gegenstand identifiziert wird, daß die elektronische Repräsentation des die Markierung enthaltenden Kamerabildes elektronisch abgetastet wird und daß nach einer vorbestimmten Anzahl von vergeblichen Mustererkennungs- bzw. Abtastversuchen das Kamerabild des Gegenstandes dem Sichtgerät (30) zugeführt und/oder im Bildspeicher (50) als nicht erkannt gekennzeichnet wird.

2. Verfahren nach Anspruch 1, dadurch **gekennzeichnet,** daß der Gegenstand während seines Transports durch den Abtastbereich und/oder während des Rücktransports nach einem vergeblichen Abtastversuch um wenigstens eine seiner Körperachsen gedreht wird.

3. Verfahren nach Anspruch 1 oder 2, bei dem die elektronische Kamera schwenkbar und/oder mit einem Objektiv einstellbarer Brennweite (Zoom) ausgestattet ist, dadurch **gekennzeichnet,** daß die Brennweite des Objektivs zunächst so eingestellt ist, daß die Kamera (28) den ganzen Gegenstand erfaßt und daß nach der Identifizierung des geometrischen Orts der Markierung auf dem Gegenstand die Kamera (28) so geschwenkt und/oder ihre Brennweite so eingestellt wird, daß im wesentlichen nur noch die Markierung von der Kamera (28) erfaßt wird.

4. Vorrichtung zur Durchführung eines Verfahrens nach einem der Ansprüche 1 bis 3, umfassend eine Mehrzahl von einer Zentrale (12) zugeordneten Erfassungsplätzen (10) mit je einer Transportvorrichtung (14, 16) für die zu identifizierenden Gegenstände, einem die Transportvorrichtung (14, 16) mindestens teilweise überdeckenden Tunnel (32) und einer in dem Tunnel (32) vorgesehenen optischen Abtastvorrichtung (20) für auf den Gegenständen vorgesehene Identifikationsmarkierungen, dadurch **gekennzeichnet,** daß die Transportvorrichtung in mindestens zwei einander nachgeordnete Förderbereiche mit je einer individuell steuerbaren Fdrderanordnung (14, 16) unterteilt ist, daß die Abtastvorrichtung (20) im zweiten Förderbereich angeordnet ist, daß in Transportrichtung (A) vor und nach der Abtastvorrichtung (20) jeweils mindestens eine den Durchlauf eines Gegenstandes (25) registrierende Sensoranordnung (18, 26) vorgesehen ist, daß im zweiten Förderbereich mindestens eine Kamera (28) zur Abbildung eines Gegenstandes (25) auf einem in der Zentrale (12) angeordneten Sichtgerät (30) und/oder zur Abspeicherung der Abbildung in einem Speicher (50) vorgesehen ist, und daß im ersten Förderbereich der Transportvorrichtung (14, 16) Mittel zur Vereinzelung von Gegenständen vorgesehen sind.

5. Vorrichtung nach Anspruch 4, dadurch **gekennzeichnet,** daß die Kamera (28) der Abtastvorrichtung (20) in Transportrichtung (A) nachgeordnet ist.

6. Vorrichtung nach Anspruch 4 oder 5, dadurch **gekennzeichnet,** daß die Sensoranordnungen (18, 26) Lichtschranken mit einem im wesentlichen quer zur Transportrichtung (A) verlaufenden Strahlengang sind.

7. Vorrichtung nach einem der Ansprüche 4 bis 6, dadurch **gekennzeichnet,** daß die optische Abtastvorrichtung (20) mindestens einen Strahlabtaster mit Strahlablenkung umfaßt, bei dem die Ablenkgeschwindigkeit des Abtaststrahls mit der Fördergeschwindigkeit der Transportvorrichtung (14, 16) im zweiten Förderbereich korreliert ist.

8. Vorrichtung nach einem der Ansprüche 4 bis 7, dadurch **gekennzeichnet,** daß die Kamera (28) an einem relativ zur Transportebene höhenverstellbaren Träger (38) angeordnet ist.

9. Vorrichtung nach Anspruch 8, dadurch **gekennzeichnet,** daß der Träger (38) sich quer über die Transportvorrichtung (16) erstreckt und daß mindestens eine Abtastvorrichtung (20) oder Umlenkvorrichtung für einen Abtaststrahl an dem Träger (38) angeordnet ist.

10. Vorrichtung nach Anspruch 8 oder 9, dadurch **gekennzeichnet,** daß in Transportrichtung (A) vor der Abtastvorrichtung ein Fühler (42, 44) zum Abtasten der Höhe der auf der Transportvorrichtung (16) geförderten Gegenstände vorgesehen ist und daß die Höhenverstellung des Trägers (38) in Abhängigkeit der vom Fühler (42, 44) erzeugten Signale steuerbar ist.

11. Vorrichtung nach Anspruch 10, dadurch **gekennzeichnet,** daß der Fühler einen Sender (42) und einen Empfänger (44) umfaßt, die beide an dem Träger (38) derart angeordnet sind, daß ein vom Sender (42) im wesentlichen parallel zur Transportebene ausgesandter Taststrahl bei Reflexion an einem ankommenden Gegenstand auf den Empfänger (44) fällt.

## Claims (Claims for the following Contracting State(s): ES, IT, NL, SE)

1. Method for optically scanning markings on objects at a plurality of detecting stations at which the objects are transported by means of a transport device through the scanning region of an optical scanning device, characterized in that upon irregular scanning an object is automatically transported back again into the scanning region of the optical scanning device (20) and after a prescribed number of unsuccessful scanning attempts is automatically represented on a VDU (30) of a control centre (12) for the purpose of identifying the objects, and/or an image of the non-scannable object is stored in a memory (50).

2. Method according to Claim 1, characterized in that during its transport through the scanning region and/or during the transport back after an unsuccessful scanning attempt the object is rotated about at least one of its body axes.

3. Method according to Claim 1 or 2, in which the optical scanning and the pictorial detection of the object are performed by a single electronic camera, characterized in that during the scanning operation the entire object is detected by the camera (28), in that the camera image is stored in the image memory, in that the geometric location of the marking on the object is identified by means of a pattern recognition method known per se, in that the electronic representation of the camera image containing the marking is electronically scanned, and in that after a prescribed number of unsuccessful pattern recognition or scanning attempts the camera image of the object is fed to the VDU (30) and/or is designated in the image memory (50) as being non-recognised.

4. Method according to Claim 3, in which the electronic camera can be pivoted and/or is equipped with a lens of adjustable focal length (zoom), characterized in that the focal length of the lens is firstly adjusted such that the camera (28) detects the entire object, and in that after the identification of the geometrical location of the marking on the object the camera (28) is pivoted such that and/or its focal length is adjusted such that essentially only the marking is detected by the camera (28).

5. Device for carrying out a method according to one of Claims 1 to 4, comprising a plurality of detecting stations (10) assigned to a control centre (12) and each having a transport device (14, 16) for the objects to be identified, a tunnel (32) at least partially covering the transport device (14, 16), and an optical scanning device (20), provided in the tunnel (32), for identification markings provided on the objects, characterized in that the transport device is subdivided into at least two successively located conveyor regions each having an individually controllable conveyor arrangement (14, 16), in that the scanning device (20) is arranged in the second conveyor region, in that at least one sensor arrangement (18, 26) registering the passage of an object (25) is respectively provided upstream and downstream of the scanning device (20) in the transport direction (A), and in that at least one camera (28) is provided in the second conveyor region for the purpose of imaging an object (25) on a VDU (30) arranged in the control centre (12) and/or for the purpose of storing the image in a memory (50).

6. Device according to Claim 5, characterized in that the camera (28) is downstream of the scanning device (20) in the transport direction (A).

7. Device according to Claim 5 or 6, characterized in that means for individualising objects are provided in the first conveyor region of the transport device (14, 16).

8. Device according to one of Claims 5 to 7, characterized in that the sensor arrangements (18, 26) are light barriers having a beam path which essentially extends transverse to the transport direction (A).

9. Device according to one of Claims 5 to 8, characterized in that the optical scanning device (20) comprises at least one beam scanner having beam deflection, in which scanner the speed of deflection of the scanning beam is correlated with the rate of conveyance of the transport device (14, 16) in the second conveyor region.

10. Device according to one of Claims 5 to 9, characterized in that the camera (28) is arranged on a carrier (38) which is height-adjustable relative to the transport plane.

11. Device according to Claim 10, characterized in that the carrier (38) extends transversely over the transport device (16), and in that at least one scanning device (20) or deflecting device for a scanning beam is arranged on the carrier (38).

12. Device according to Claim 10 or 11, characterized in that a sensor (42, 44) for scanning the height of the objects conveyed on the transport device (16) is provided upstream of the scanning device in the transport direction (A), and in that the height adjustment of the carrier (38) can be controlled as a function of the signals generated by the sensor (42, 44).

13. Device according to Claim 12, characterized in that the sensor comprises a transmitter (42) and a receiver (44) which are both arranged on the carrier (38) in such a way that a scanning beam emitted by the transmitter (42) essentially parallel to the transport plane falls onto the receiver (44) upon reflection at an oncoming object.

## Claims (Claims for the following Contracting State(s): DE, FR, GB)

1. Method for optically scanning markings on objects at a plurality of detecting stations at which the objects are transported by means of a transport device through the scanning region of an optical scanning device, characterized in that upon irregular scanning an object is automatically transported back again into the scanning region of the optical scanning device (20) and after a prescribed number of unsuccessful scanning attempts is automatically represented on a VDU (30) of a control centre (12) for the purpose of identifying the objects, and/or an image of the non-scannable object is stored in an image memory (50), in that the optical scanning and the pictorial detection of the object are performed by a single electronic camera, in that during the scanning operation the entire object is detected by the camera (28), in that the camera image is stored in the image memory (50), in that the geometric location of the marking on the object is identified by means of a pattern recognition method known per se, in that the electronic representation of the camera image containing the marking is electronically scanned, and in that after a prescribed number of unsuccessful pattern recognition or scanning attempts the camera image of the object is fed to the VDU (30) and/or is designated in the image memory (50) as being non-recognised.

2. Method according to Claim 1, characterized in that during its transport through the scanning region and/or during the transport back after an unsuccessful scanning attempt the object is rotated about at least one of its body axes.

3. Method according to Claim 1 or 2, in which the electronic camera can be pivoted and/or is equipped with a lens of adjustable focal length (zoom), characterized in that the focal length of the lens is firstly adjusted such that the camera (28) detects the entire object, and in that after the identification of the geometrical location of the marking on the object the camera (28) is pivoted such that and/or its focal length is adjusted such that essentially only the marking is detected by the camera (28).

4. Device for carrying out a method according to one of Claims 1 to 3, comprising a plurality of detecting stations (10) assigned to a control centre (12) and each having a transport device (14, 16) for the objects to be identified, a tunnel (32) at least partially covering the transport device (14, 16), and an optical scanning device (20), provided in the tunnel (32), for identification markings provided on the objects, characterized in that the transport device is subdivided into at least two successively located conveyor regions each having an individually controllable conveyor arrangement (14, 16), in that the scanning device (20) is arranged in the second conveyor region, in that at least one sensor arrangement (18, 26) registering the passage of an object (25) is respectively provided upstream and downstream of the scanning device (20) in the transport direction (A), in that at least one camera (28) is provided in the second conveyor region for the purpose of imaging an object (25) on a VDU (30) arranged in the control centre (12) and/or for the purpose of storing the image in a memory (50), and in that means for individualising objects are provided in the first conveyor region of the transport device (14, 16).

5. Device according to Claim 4, characterized in that the camera (28) is downstream of the scanning device (20) in the transport direction (A).

6. Device according to Claim 4 or 5, characterized in that the sensor arrangements (18, 26) are light barriers having a beam path which essentially extends transverse to the transport direction (A).

7. Device according to one of Claims 4 to 6, characterized in that the optical scanning device (20) comprises at least one beam scanner having beam deflection, in which scanner the speed of deflection of the scanning beam is correlated with the rate of conveyance of the transport device (14, 16) in the second conveyor region.

8. Device according to one of Claims 4 to 7, characterized in that the camera (28) is arranged on a carrier (38) which is height-adjustable relative to the transport plane.

9. Device according to Claim 8, characterized in that the carrier (38) extends transversely over the transport device (16), and in that at least one scanning device (20) or deflecting device for a scanning beam is arranged on the carrier (38).

10. Device according to Claim 8 or 9, characterized in that a sensor (42, 44) for scanning the height of the objects conveyed on the transport device (16) is provided upstream of the scanning device in the transport direction (A), and in that the height adjustment of the carrier (38) can be controlled as a function of the signals generated by the sensor (42, 44).

11. Device according to Claim 10, characterized in that the sensor comprises a transmitter (42) and a receiver (44) which are both arranged on the carrier (38) in such a way that a scanning beam emitted by the transmitter (42) essentially parallel to the transport plane falls onto the receiver (44) upon reflection at an oncoming object.

## Revendications (Revendications pour l'(les) Etat(s) contractant(s) suivant(s): ES, IT, NL, SE)

1. Procédé de lecture optique de marques sur des objets en une multiplicité de postes de détection, auxquels les objets sont amenés au moyen d'un dispositif de transport à travers la zone de lecture d'un dispositif de lecture optique, caractérisé par le fait que dans le cas d'une lecture incorrecte, un objet est déplacé automatiquement en sens inverse et est ramené dans la zone de lecture du dispositif de lecture optique (20) et, au bout d'un nombre prédéterminé de tentatives infructueuses de lecture, est représenté automatiquement sur un appareil de visualisation (30) d'un central (12) pour l'identification des objets, et/ou une image de l'objet non lue est mémorisée dans une mémoire (50).

2. Procédé suivant la revendication 1, caractérisé que pendant son transport à travers la zone de lecture et/ou pendant le transport en sens inverse après une tentative de lecture infructueuse, l'objet est pivoté autour d'au moins l'un des axes de son corps.

3. Procédé suivant la revendication 1 ou 2, selon lequel la lecture optique et la détection avec formation d'images de l'objet sont réalisées par un seul appareil de prise de vues électronique, caractérisé par le fait que pendant l'opération de lecture, l'ensemble de l'objet est détecté par l'appareil de prise de vues (28), que l'image de l'appareil de prise de vues est mémorisée dans la mémoire d'images, que l'emplacement géométrique de la marque sur l'objet est identifié au moyen d'un procédé connu en soi de reconnaissance des formes, que la représentation électronique de l'image de l'appareil de prise de vues, contenant la marque, est lue électroniquement et qu'au bout d'un nombre prédéterminé de tentatives infructueuses de reconnaissance de formes ou de lecture, l'image de l'objet fourni par l'appareil de prise de vues est envoyée à l'appareil de visualisation (30) et/ou est caractérisée comme non reconnue dans la mémoire d'images (50).

4. Procédé suivant la revendication 3, selon lequel l'appareil de prise de vues électronique peut pivoter et/ou est équipé d'un objectif à distance focale réglable (zoom), caractérisé par le fait que la distance focale de l'objectif est tout d'abord réglée de telle sorte que l'appareil de prise de vues (28) détecte l'ensemble de l'objet, et qu'après l'identification de l'emplacement géométrique de la marque sur l'objet, l'appareil de prise de vues (28) est pivoté et/ou sa distance focale est réglée de telle sorte que essentiellement seule la marque est détectée par l'appareil de prise de vues (28).

5. Dispositif pour la mise en oeuvre d'un procédé suivant l'une des revendications 1 à 4, comprenant une multiplicité de postes de détection (10) associés à un central (12) et comportant chacun un dispositif de transport (14, 16) pour les objets devant être identifiés, un tunnel (32) qui recouvre au moins partiellement le dispositif de transport (14, 16), et un dispositif de lecture optique (20) prévu dans le tunnel (32) et servant à lire des marques d'identification prévues sur les objets, caractérisé par le fait que le dispositif de transport est divisé en au moins deux zones d'entraînement disposées à la suite l'une de l'autre et comportant chacune un dispositif d'entraînement (14, 16) pouvant être commandé individuellement, que le dispositif de lecture (20) est disposé dans la seconde zone d'entraînement, qu'un dispositif de capteurs (18, 26), qui enregistre le passage d'un objet (25) est prévu, dans la direction de transport (A), en amont et en aval du dispositif de lecture (20), et que dans la seconde zone d'entraînement est prévu au moins un appareil de prise de vues (28) servant à former l'image d'un objet (25) sur un appareil de visualisation (30) disposé dans le central (12) et/ou mémoriser l'image dans une mémoire (50).

6. Dispositif suivant la revendication 5, caractérisé par le fait que l'appareil de prise de vues (28) est disposé en aval du dispositif de lecture (20) dans la direction de transport (A).

7. Dispositif suivant la revendication 5 ou 6, caractérisé par le fait que des moyens pour séparer les objets sont prévus dans la première zone d'entraînement du dispositif de transport (14, 16).

8. Dispositif suivant l'une des revendications 5 à 7, caractérisé par le fait que les dispositifs de capteurs (18, 26) sont des relais photoélectriques dont le trajet du rayonnement est sensiblement transversal par rapport à la direction de transport (A).

9. Dispositif suivant l'une des revendications 5 à 8, caractérisé par le fait que le dispositif de lecture optique (20) comprend au moins un dispositif de lecture à faisceau avec déviation du faisceau, la vitesse de déviation du faisceau de lecture étant corrélée à la vitesse d'entraînement du dispositif de transport (14, 16) dans la seconde zone d'entraînement.

10. Dispositif suivant l'une des revendications 5 à 9, caractérisé par le fait que l'appareil de prise de vues (28) est disposé sur un support (38), qui est réglable en hauteur par rapport au plan de transport.

11. Dispositif suivant la revendication 10, caractérisé en ce que le support (38) s'étend transversalement au-dessus du dispositif de transport (16) et qu'au moins un dispositif de lecture (20) ou un dispositif de renvoi pour un faisceau de lecture est disposé sur le support (38).

12. Dispositif suivant la revendication 10 ou 11, caractérisé par le fait qu'un capteur (42, 44) servant à explorer la hauteur des objets entraînés sur le dispositif de transport (16) est prévu en amont du dispositif de lecture dans la direction de transport (A) et que le réglage en hauteur du support (38) peut être commandé en fonction des signaux produits par le capteur (42, 44).

13. Dispositif suivant la revendication 12, caractérisé par le fait que le capteur comprend un émetteur (42) et un récepteur (44), qui sont disposés tous deux sur le support (38) de sorte qu'un faisceau d'exploration, émis par l'émetteur (42) sensiblement parallèlement au plan de transport rencontre le récepteur (44), lors de sa réflexion sur un objet arrivant.

## Revendications (Revendications pour l'(les) Etat(s) contractant(s) suivant(s): DE, FR, GB)

1. Procédé de lecture optique de marques sur des objets en une multiplicité de postes de détection, auxquels les objets sont amenés au moyen d'un dispositif de transport à travers la zone de lecture d'un dispositif de lecture optique, caractérisé par le fait que dans le cas d'une lecture incorrecte, un objet est déplacé automatiquement en sens inverse et est ramené dans la zone de lecture du dispositif de lecture optique (20) et, au bout d'un nombre prédéterminé de tentatives infructueuses de lecture, est représenté automatiquement sur un appareil de visualisation (30) d'un central (12) pour l'identification des objets, et/ou une image de l'objet non lue est mémorisée dans une mémoire (50), que la lecture optique et la détection avec formation d'images de l'objet sont exécutées par une seule caméra électronique, que pendant la lecture optique et la détection avec formation d'images de l'objet sont réalisées par un seul appareil de prise de vues électronique, caractérisé par le fait que pendant l'opération de lecture, l'ensemble de l'objet est détecté par l'appareil de prise de vues (28), que l'image de l'appareil de prise de vues est mémorisée dans la mémoire d'images, que l'emplacement géométrique de la marque sur l'objet est identifié au moyen d'un procédé connu en soi de reconnaissance de formes, que la représentation électronique de l'image de l'appareil de prise de vues, contenant la marque, est lue électroniquement et qu'au bout d'un nombre prédéterminé de tentatives infructueuses de reconnaissance de formes ou de lecture, l'image de l'objet fourni par l'appareil de prise de vues est envoyée à l'appareil de visualisation (30) et/ou est caractérisée comme non reconnue dans la mémoire d'images (50).

2. Procédé selon la revendication 1, caractérisé par le fait que pendant son transport à travers la zone de lecture et/ou pendant le transport en sens inverse après une tentative de lecture infructueuse, l'objet est pivoté autour d'au moins l'un des axes de son corps.

3. Procédé suivant la revendication 1 ou 2, selon lequel l'appareil de prise de vues électronique peut pivoter et/ou est équipé d'un objectif à distance focale réglable (zoom), caractérisé par le fait que la distance focale de l'objectif est tout d'abord réglée de telle sorte que l'appareil de prise de vues (28) détecte l'ensemble de l'objet, et qu'après l'identification de l'emplacement géométrique de la marque sur l'objet, l'appareil de prise de vues (28) est pivoté et/ou sa distance focale est réglée de telle sorte que essentiellement seulement la marque est détectée par l'appareil de prise de vues (28).

4. Dispositif pour la mise en oeuvre d'un procédé suivant l'une des revendications 1 à 3, comprenant une multiplicité de postes de détection (10) associés à un central (12) et comportant chacun un dispositif de transport (14, 16) pour les objets devant être identifiés, un tunnel (32) qui recouvre au moins partiellement le dispositif de transport (14, 16) et un dispositif de lecture optique (20) prévu dans le tunnel (32) et servant à lire des marques d'identification prévues sur les objets, caractérisé par le fait que le dispositif de transport est divisé en au moins deux zones d'entraînement disposées à la suite l'une de l'autre et comportant chacune un dispositif d'entraînement (14, 16) pouvant être commandé individuellement, que le dispositif de lecture (20) est disposé dans la seconde zone d'entraînement, qu'un dispositif de capteurs (18, 26), qui enregistre le passage d'un objet (25), est prévu, dans la direction de transport (A), en amont et en aval du dispositif de lecture (20), et que dans la seconde zone d'entraînement est prévu au moins un appareil de prise de vues (28) servant à former l'image d'un objet (25) sur un appareil de visualisation (30) disposé dans le central (12) et/ou mémoriser l'image dans une mémoire (50), et que des moyens pour séparer les objets sont prévus dans la première zone d'entraînement du dispositif de transport (4, 16).

5. Dispositif suivant la revendication 4, caractérisé par le fait que le dispositif de prise de vues (28) est disposé en aval du dispositif de lecture (20) dans la direction de transport (A).

6. Dispositif suivant la revendication 4 ou 5, caractérisé par le fait que les dispositifs de capteurs (18, 26) sont des relais photoélectriques dont le trajet du rayonnement est sensiblement transversal par rapport à la direction de transport (A).

7. Dispositif suivant l'une des revendications 4 à 6, caractérisé par le fait que le dispositif de lecture optique (20) comprend au moins un dispositif de lecture a faisceau à déviation du faisceau, la vitesse de déviation du faisceau de lecture étant corrélée à la vitesse d'entraînement du dispositif de transport (14, 16) dans la seconde zone d'entraînement.

8. Dispositif suivant l'une des revendications 4 à 7, caractérisé par le fait que l'appareil de prise de vues (28) est disposé sur un support (38), qui est réglable en hauteur par rapport au plan de transport.

9. Dispositif suivant la revendiccation 8, caractérisé en ce que le support (38) s'étend transversalement au-dessus du dispositif de transport (16) et qu'au moins un dispositif de lecture (20) ou un dispositif de renvoi pour un faisceau de lecture est disposé sur le support (38).

10. Dispositif suivant la revendication 8 ou 9, caractérisé par le fait qu'un capteur (42, 44) servant à explorer la hauteur des objets entraînés sur le dispositif de transport (16) est prévu en amont du dispositif de lecture dans la direction de transport (A) et que le réglage en hauteur du support (38) peut être commandé en fonction des signaux produits par le capteur (42, 44).

11. Dispositif suivant la revendication 10, caractérisé par le fait que le capteur comprend un émetteur (42) et un récepteur (44), qui sont disposés tous deux sur le support (38) de sorte qu'un faisceau d'exploration, émis par l'émetteur (42) sensiblement parallèlement au plan de transport, rencontre le récepteur (44), lors de sa réflexion sur un objet arrivant.
